# EUROPEAN PATENT SPECIFICATION

(11) **EP 0 690 896 B1**
(45) Date of publication and mention of the grant of the patent: **10.06.1998**
(21) Application number: 94912858.1
(22) Date of filing: 24.03.1994
(51) Int. Cl.: C09J 7/00, C08F 283/10, B60R 13/06

(54) **TOPOGRAPHICAL SHEET MATERIAL AND METHOD FOR USING SAME**
TOPOGRAPHISCHES BLATTMATERIAL UND VERWENDUNGSVERFAHREN
MATERIAU STRATIFIE A RELIEF ET PROCEDE D'UTILISATION DUDIT MATERIAU

(30) Priority: 24.03.1993 US 36463; 31.01.1994 US 189314
(43) Date of publication of application: 10.01.1996
(73) Proprietor: MINNESOTA MINING AND MANUFACTURING COMPANY, St. Paul, Minnesota 55133-3427 (US)
(72) Inventor: JOHNSON, Michael, A., Saint Paul, MN 55133-3427 (US); TUMEY, Michael, L., Saint Paul, MN 55133-3427 (US); WILLETT, Peggy, S., Saint Paul, MN 55133-3427 (US); GEORGE, Clayton, A., Saint Paul, MN 55133-3427 (US); MEYER, Scott, R., Saint Paul, MN 55133-3427 (US); KITANO, Shuichi, Saint Paul, MN 55133-3427 (US); OGATA, Kiyoshi, Saint Paul, MN 55133-3427 (US); SATO, Shinobu, Saint Paul, MN 55133-3427 (US); SHINOZAKI, Kotaroh, Saint Paul, MN 55133-3427 (US)
(74) Representative: Warcoin, Jacques
(86) International application number: US9403198
(87) International publication number: WO9421741

(56) References cited:
- US-A- 5 086 088

## Description

### Field of the Invention

This invention relates to a melt-flowable sheet material and a method for using the same.

### Background of the Invention

U.S. Patent No. 5,086,088 discloses a latent, thermosettable pressure-sensitive adhesive composition comprising an acrylate pressure-sensitive adhesive and an epoxy resin component which provides for the thermoset cure. The adhesive composition is disclosed as being useful to fasten roof molding to a car body.

### Brief Summary of the Present Invention

The instant invention provides a latent, thermosettable, melt-flowable sheet material having a top surface and a bottom surface and comprising two or more layers. The sheet material comprises an upper layer and a lower layer, the upper layer comprising a latent, thermosettable, melt-flowable composition, and the lower layer comprising a latent, expandable, thermosettable, melt-flowable composition, wherein upon application of the sheet material to a substrate by contacting the lower layer therewith, and heating to an elevated temperature, the lower layer flows and expands and the upper layer flows. Preferably, the upper layer flows laterally such that the lower layer is essentially encapsulated by the substrate and the upper layer.

The latent, thermosettable, melt-flowable sheet material of the invention finds particular utility in providing topographical and/or protective features to primed or unprimed metal automobile parts or bodies to seal joints formed by such metal parts. The flowability and expandability of the lower layer provides for optimum sealing of such joints. The flowability of the upper layer provides for an aesthetically-pleasing surface which may be, for example, painted.

### Brief Description of the Drawings

The invention will now be described in greater detail with reference to the accompanying drawings, in which:
FIG. 1 is an end view of a sheet material of the invention prior to thermosetting or cure situated in an automobile roof ditch;
FIG. 2 is an end view of the sheet material shown in FIG. 1 subsequent to thermosetting or cure;
FIG. 3 is an end view of a sheet material of the invention prior to thermosetting or cure situated in an automobile roof ditch; and
FIG. 4 is an end view of the sheet material shown in FIG. 1 subsequent to thermosetting or cure.

### Detailed Description of the Invention

The latent, thermosettable, melt-flowable sheet material of the present invention comprises at least two layers of latent, thermosettable, melt-flowable compositions (i.e., the "upper layer" and the "lower layer"). By "melt-flowable" is meant that, on heating, the composition exhibits viscous flow resulting in an irreversible bulk deformation of the composition. The preferred melt-flowable composition for the lower layer may also exhibit pressure-sensitive adhesive properties. The melt-flowable composition for the upper layer may also, if desired, exhibit pressure-sensitive adhesive properties. By "pressure-sensitive adhesive" is meant that the sheet material exhibits pressure-sensitive adhesive properties at the application or cure temperature at which the sheet material is being exposed to. Generally, the temperature will be between ambient-temperature and about 204°C. It is presently preferred that the adhesive exhibit pressure-sensitive properties at ambient temperature such as 22°C.

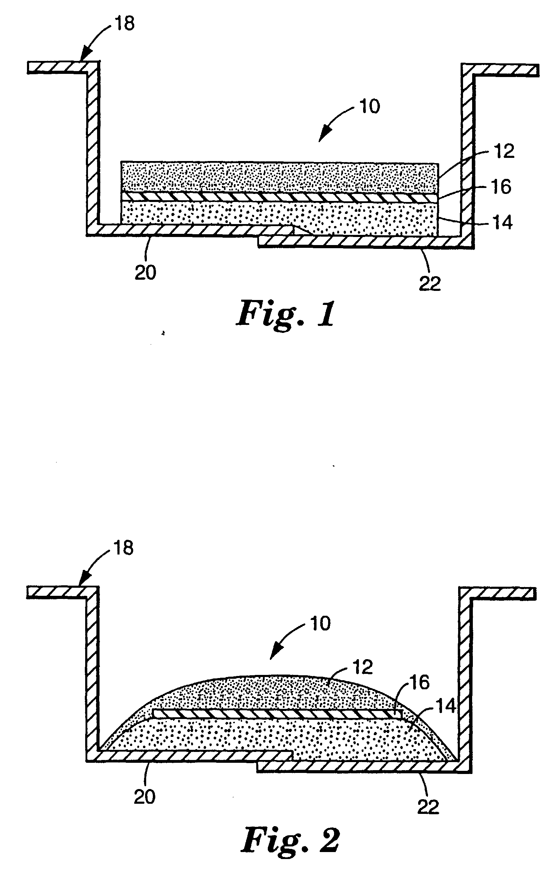

Referring to the drawings, there is shown in FIG. 1 sheet material 10 comprising upper layer 12, lower layer 14 and polymeric film 16 therebetween. Sheet material 10 is situated in and adhered to roof ditch 18 which is formed by adjoining panels 20 and 22. After thermosetting by heating to an elevated temperature, lower layer 14 has expanded and upper layer 12 has flowed such that lower layer 14 is essentially encapsulated by upper layer 12 and roof ditch 18 as shown in FIG. 2.

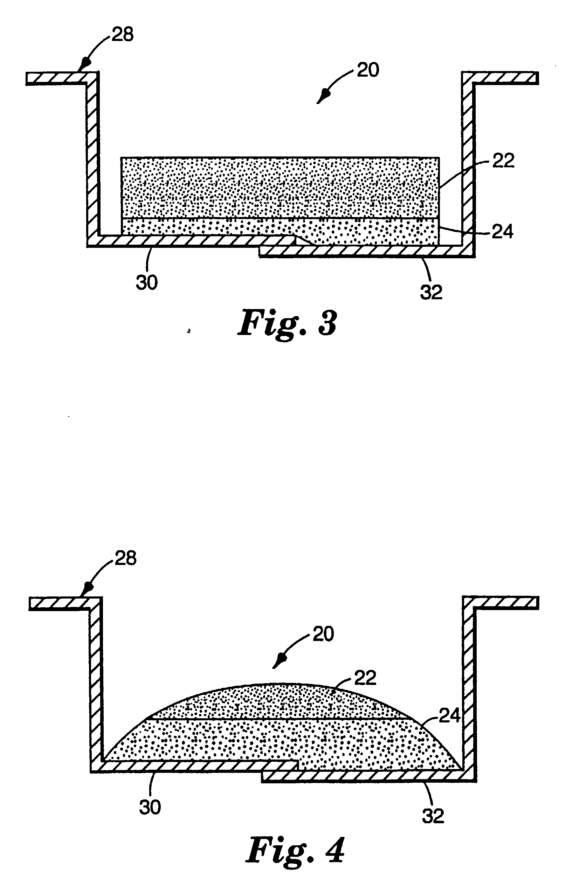

Referring to the drawings, there is shown in FIG. 3 sheet material 20 comprising upper layer 22 and lower layer 24. Sheet material 20 is situated in and adhered to roof ditch 28 which is formed by adjoining panels 30 and 32. After thermosetting by heating to an elevated temperature, lower layer 24 has expanded and upper layer 22 has flowed. In this case, lower layer 24 is not essentially encapsulated by upper layer 22 and roof ditch 28 as shown in FIG. 4.

The thermosettable, melt-flowing compositions used in both the upper layer and lower layer preferably comprise the photochemical reaction products of starting materials comprising (i) a prepolymeric (i.e., partially polymerized to a viscous syrup typically between about 100 to 10,000 centipoises) or monomeric syrup comprising an acrylic or methacrylic acid ester; (ii) an epoxy resin; (iii) a photoinitiator; and (iv) a heat-activatable hardener for the epoxy resin. The composition employed in preparing the upper layer also preferably includes an acrylate copolymer as will be discussed below. The composition employed in preparing the lower layer which is capable of expanding on heating additionally includes a blowing or foaming agent or expandable spheres. All such compositions may be coated and polymerized conveniently in a variety of thicknesses including relatively thick sections.

The photopolymerizable prepolymeric or monomeric syrup used in the compositions for preparing both the upper layer and the lower layer contains an acrylic or methacrylic ester and optionally a copolymerizable reinforcing comonomer. The acrylic or methacrylic ester is a monofunctional acrylic or methacrylic ester of a non-tertiary alcohol, having from about 4 to about 12 carbon atoms in the alcohol moiety. Included in this class of esters are n-butyl acrylate, hexyl acrylate, 2-ethylhexyl acrylate, octyl acrylate, isooctyl acrylate, decyl acrylate and dodecyl acrylate. Mixtures of esters may be employed.

The copolymerizable reinforcing monomer, if employed, is preferably selected from the group consisting of monomers such as isobornyl acrylate, N-vinyl pyrrolidone, N-vinyl caprolactam, N-vinyl piperidine, N,N-dimethylacrylamide, and acrylonitrile. Preferred reinforcing monomers are nitrogen-containing such as those nitrogen-containing monomers listed above. The reinforcing monomer will generally be selected such that a homopolymer prepared therefrom will have a glass transition higher than a homopolymer prepared from the acrylic or methacrylic ester employed. Small amounts of copolymerizable acids such as acrylic acid may be included as long as they do not deleteriously affect the curing of the epoxy. Acrylic acid can be used in amounts up to about 2 parts acrylic acid to 100 parts of acrylic ester monomer.

In the event that the prepolymeric or monomeric syrup comprises both an acrylic or methacrylic ester and a reinforcing comonomer, the acrylic or methacrylic ester will generally be present in an amount of about 50 to 95 parts by weight, and the reinforcing comonomer will be present in a corresponding amount of about 50 to 5 parts by weight. One skilled in the art will be able to vary the nature and amount of the reinforcing monomer to obtain the properties desired.

Further, both the photopolymerizable acrylic or methacrylic prepolymer or monomeric syrup and the photopolymerized polymer form a stable mixture with the epoxy resin.

According to a further embodiment the invention relates to a latent, thermosettable, melt-flowable sheet material comprising a latent, thermosettable, melt-flowable composition which is the photochemical reaction product of starting materials comprising (i) a prepolymeric or monomeric syrup comprising a methacrylic acid ester; (ii) an epoxy resin which is a liquid at room temperature; (iii) an acrylate copolymer; (iv) a photoinitiator; and (v) a heat-activatable hardener for said epoxy resin.

As indicated above, the composition employed in preparing the upper layer also preferably includes an acrylate copolymer which contributes to handling properties prior to thermosetting cure and the hardness of that layer when it is fully cured while, at the same time, not detracting from the flowability of that layer upon heating to effect the cure. Preferably, the acrylate copolymer has a Tg above 22°C. Suitable acrylate copolymers include isobutylmethacrylate polymer, polyethylmethacrylate copolymer, methyl methacrylate copolymer, and the two methylmethacrylate/butylmethacrylate copolymers sold by Rohm & Haas under the tradenames Acryloid@B-67, B-72, B-82, B-60 and B-66, respectively. The amount of any such acrylate copolymer employed preferably will be about 5 to 100 parts by weight per 100 parts by weight of the prepolymeric or monomeric syrup. The acrylate copolymer can also be added to the lower layer.

Polyacetal polymers can also be added to the compositions of either the upper layer or the lower layer to increase the modulus of the cured composition before thermosetting, as well as enhance the adhesion of paint to the sheet. A preferred type of polyacetal polymer is poly(vinylbutyral). The poly(vinylbutyral) should have sufficient hydroxyl functionality to be soluble in acrylate monomers. Hydroxyl functionalities between about 9% and 13% have been found to be useful. The poly(vinylbutyral) is typically used in amounts from about 10 to 120 parts per 100 parts of acrylate, and preferably used in amounts from about 20 to 80 parts per 100 parts of acrylate. Addition of higher amounts of poly(vinylbutyral) can be used to reduce or eliminate the tackiness of the sheet material so that the sheet material is easier to handle.

Poly(vinylbutyral) resins are sold by Monsanto under the trademark BUTVAR™ in various grades having different molecular weights, etc.

Other additives useful to modify the flow properties and to improve the handling properties of the sheet include polyester polymers which may be added to either the upper or lower layer. The polymers are typically added to the upper layer. The amount of polyester polymer that can be used is limited by the amount polymer that is soluble in the acrylate monomer or syrup. Amounts up to about 20 parts of polyester polymer per 100 parts of acrylate monomer have been found to be useful. Preferred polyester polymers are those having carboxyl or hydroxyl terminal groups, and a number average molecular weight between about 7500 and 200,000, more preferably between about 10,000 and 50,000, and most preferably between about 15,000 and 30,000. It is preferred that the polyesters are also linear, saturated, and semi-crystalline. Suitable polyesters are commercially available from Hüls America, Inc. under the Dynapol trademark with the following product numbers S1402, S1358, S1227, S1229, S1359, and S1401.

Another useful class of polyesters are polycaprolactones, which may be added to either layer. They are particularly useful in the upper layer to enhance flow properties and improve adhesion of paint to the sheet. The polycaprolactones can be used in the same amounts as the polyester polymers. Useful polycaprolactones include those described in U.S. Pat. No. 3,169,945. Preferred polycaprolactone polyols can be represented by the following structure:

HO-[(CH₂)₅-C(=O)-O]ₙ-R-[-O-C(=O)-(CH₂)₅]ₙ-OH

wherein
R is a divalent alkylene radical, and
n is approximately 2 to 200.
Useful polycaprolactone diols and polymers are commercially available from Union Carbide, Inc. under the TONE trademark.

It may be desirable to employ glycidyl methacrylate, glycidyl acrylate, or another epoxy functional monomer together with the acrylic or methacrylic ester and reinforcing monomer, if employed. Such an epoxy-functional monomer, if employed, will preferably be present in an amount of about 0.1 to about 10 parts per 100 parts by weight of all monomers used.

Another epoxy functional oligomer useful as a reinforcing or cross-linking species is the epoxy adduct of 2-isocyanotoethylmethacrylate and diglycidyl ether of bisphenol A. If used, the adduct can be used in amounts up to about 100 parts of adduct per 100 parts of acrylate and preferably from 1 part to 30 parts per 100 parts of acrylate.

The reinforcement of the cured composition may also be effected by the use of silanes which have an organofunctional group capable of reacting with an epoxy group or a vinyl group, and a silane functional group which can react with silanol groups at the surface of suitable inorganic fillers. If used, silanes can be used in amounts of from about 0.01 part to about 10 parts per 100 parts acrylate, and preferably from about 0.1 part to about 5 parts.

Silanes are commercially available from a number of different suppliers, including Hüls America, Inc. Mixtures of silanes can also be used. In a useful embodiment, a mixture of two silanes having different functional groups can be used. For example, a first silane can contain a functional group that is selectively reactive with epoxy groups and a second silane that is reactive with acrylates. A silica containing filler can then serve as a bridging agent to connect the epoxy and acrylate phases of the thermosettable pressure sensitive adhesive. Commercially available silanes that can function in this manner are Hüls G6720 (epoxy silane) and Hüls M8550 (methacrylate silane), both available from Hüls America, Inc. A 1:1 weight ratio is useful, although the amount of each silane could be adjusted for the ratio of the acrylate moiety to the epoxy moiety.

Crosslinking agents for only the acrylate phase can be added to increase the stiffness of the sheet material to facilitate handling. Useful crosslinking agents are those that are free-radically polymerizable with acrylate monomers such as divinyl ethers and multi-functional acrylates. Examples of multi-functional acrylates include 1,6-hexanediol diacrylate, tri-methylol-propane triacrylate, pentaerythritol tetracrylate, and 1,2-ethylene glycol diacrylate. The acrylate crosslinking agent should not impede the flow and/or expansion of either the upper or lower layer. Amounts up to about 1 part per 100 parts acrylate can be used, and 0.1 to 0.2 part is preferred.

In order to provide a sheet material exhibiting the desired flow characteristics in response to heating, it may be desirable to include a chain transfer agent in the starting materials used for preparing the thermosettable pressure sensitive adhesive. Such inclusion facilitates a lower molecular weight acrylic polymer.

Useful epoxy resins for both the upper layer and lower layer may be selected from the group of compounds that contain an average of more than one, and preferably at least two, epoxy groups per molecule. The epoxy resin preferably is either liquid or a semiliquid at room temperature. Most preferred epoxy resins for the upper layer are liquid at room temperature to provide the desired level of flowability of the upper layer upon heating during the curing process. Representative examples of suitable epoxies for both the lower layer and the upper layer include phenolic epoxy resins, bisphenol epoxy resins, hydrogenated epoxy resins, aliphatic epoxy resins, halogenated bisphenol epoxy resins, and novalac epoxies. Mixtures of epoxy resins may be employed.

Preferred epoxy resins for the lower layer include bisphenol epoxies with the most preferred epoxy resin being the diglycidyl ether of bisphenol-A, formed by reaction of bisphenol-A with epichlorohydrin.

Examples of preferred liquid epoxies for the upper layer include hydrogenated epoxy resins and aliphatic epoxy resins.

The epoxy resin employed in each composition will generally be present in an amount of about 25 to 150 parts by weight based on 100 parts by weight of the prepolymeric or monomeric syrup contained in the composition employed to make each respective layer.

The photoinitiator employed to polymerize the prepolymeric or monomeric syrup in each composition may be any conventional free radical photoinitiator activatable by, for example, ultraviolet light. An example of a suitable photoinitiator is 2,2-dimethoxy-1,2-diphenylethane-1-one (Irgacure™651 available from Ciba-Geigy Corporation). The photoinitiator will typically be employed in an amount of about 0.01 to 5 parts by weight per 100 parts of the prepolymeric or monomeric syrup.

The heat-activatable hardener is added to each composition to effect the curing of the epoxy resin under application of heat. The hardener may be any type, but preferably an amine type hardener that is selected from the group comprising dicyandiamide or polyamine salts. These are available from a variety of sources, e.g., Omicure™ available from Omicron Chemical and Ajicure™ available from Ajinomoto Chemical. The heat-activatable hardener will typically be employed in an amount of about 0.1 to 20 parts by weight, and preferably 0.5 to 10 parts by weight per 100 parts by weight of the prepolymeric or monomeric syrup. Sufficient hardener should be employed to achieve cure of the epoxy resin.

Because there are many points in, for example, an automotive painting cycle at which the sheet material may be used, the heat to which the sheet material is exposed may be insufficient to fully cure the epoxy resin. In these cases, it may be advantageous to add an accelerator to the prepolymer blend, so the resin may fully cure at a lower temperature, or may fully cure when exposed to heat for shorter periods. Imidazoles and urea derivatives are particularly preferred in the practice of the present invention for use as accelerators because of their ability, as shown by the examples herein, to extend the shelf life of acrylic based materials containing uncured epoxy resin. The most preferred imidazoles for use in the present invention are 2,4-diamino-6-(2'-methyl-imidazoyl)-ethyl-s-triazine isocyanurate, 2-phenyl-4-benzyl-5-hydoxymethylimidazole, 2,4-diamino-6-(2'-methyl-imidazoyl)-ethyl-s-triazine, hexakis (imidazole) nickel phthalate and toluene bis-dimethylurea. Such an accelerator may be employed typically in an amount of up to about 20 parts by weight per 100 parts by weight of the prepolymeric or monomeric syrup.

As indicated above, the composition used for preparing the lower layer also includes a blowing or foaming agent or expandable spheres which are activatable by heating to provide the desired expansion of the lower layer. Suitable blowing or foaming agents are well known in the art and include azo-derivatives. Suitable expandable spheres are also well known in the art. A blowing or foaming agent will preferably be employed in an amount of about 0.1 to 5 parts by weight per 100 parts by weight of the prepolymeric or monomeric syrup in the composition used for preparing the lower layer.

Nonwoven and loosely woven fabrics or scrims can be used to add strength to the sheet either between the two layers, or laminated to one or both exposed surfaces.

A nonwoven fabric laminated to the bottom surface also provides channels to allow trapped air to escape during the bonding process. When a strip of the sheet material is applied to a substrate, air can be trapped between the sheet and the substrate, particularly when the bottom surface of the sheet material is tacky. As the sheet material is heated, trapped air expands to form an air bubble, which collapses when the sheet material is cooled and a dimple or a defect is formed on the surface of the sheet material. The defect can be avoided by laminating a nonwoven scrim to the bottom surface so that when it melts sufficiently to flow through the nonwoven and bond to the substrate, and entrapped air can escape around the nonwoven fibers.

Useful nonwovens can be formed from natural and synthetic polymeric fibers that adhere to the sheet material such as polyester, nylon, cotton, polypropylene, cellulose acetate, acetate, or blends thereof. It is preferred that the nonwoven materials are relatively thin, e.g., from about 0.005 to about 0.1 mm thick. The useful thickness of the scrim materials can vary depending upon the thickness of the sheet material, but the scrim is typically less than about 20% of the total thickness of the sheet, and preferably, the scrim is less than about 10% of the total thickness of the sheet. Suitable nonwoven materials typically have a basis weight range of about 5 to about 200 grams/square meter, and preferably from about 25 to 150 grams/square meter. Suitable nonwovens are commercially'available under the tradename CEREX™, from Mitsubishi Petrochemical Co., and under the tradename Syntex™, from the Reemay Co.

Long strands of yarns, fibers, or filaments can also be used to reinforce the sheet material. The strands can be positioned between the layers, embedded within either the upper or lower layer, or adhered to the exposed surface of either layer. Preferred fibers have a diameter greater than 5 microns and less than one-tenth the thickness of the sheet material. The strands can be made from polyester, nylon, acetate, cellulose, cotton, and the like. The number of strands will vary depending upon the size of the yarn, fiber, or filament and the amount of reinforcement needed. The number can vary from about 1 to 2000 strands per cm width, and more typically from about 1 to 200 strands per cm width.

A thermoplastic film that is dimensionally stable at temperatures of use, i.e., oven paint cycles up to about 200°C and cold weather temperatures down to about -40°C, can be laminated to the exposed surface of the upper layer of the sheet material before thermosetting to provide a smooth surface for painting after thermosetting. Useful films include polyimide films and biaxially oriented polyester films having thicknesses ranging from about 0.025 mm to about 0.5 mm, and preferably having thicknesses in the range from 0.05 mm to about 0.25 mm. The film can be treated to enhance adhesion to the layers, e.g., primed or corona treated.

Other useful materials which can be blended into the thermosettable, melt-flowable compositions include, but are not limited to, fillers, pigments, fibers, woven and nonwoven fabrics, antioxidants, stabilizers, fire retardants, and viscosity adjusting agents.

The above composition is coated onto a flexible carrier web, preferably a silicone release liner which is transparent to ultraviolet radiation, and polymerized in an inert, i.e., a substantially oxygen free atmosphere, e.g., a nitrogen atmosphere. A sufficiently inert atmosphere can be achieved by covering a layer of the photoactive coating with a plastic film which is substantially transparent to ultraviolet radiation, and irradiating through that film in air as described in U.S. Pat. No. 4,181,752 (Martens et al.). The liners may then be removed when it is desired to use the resulting sheet material in the method of the invention.

Nonwoven materials or strands of yarn, fibers, or filaments can be incorporated into the sheet material by coating the composition of either the upper layer or the lower layer onto the nonwoven or strands positioned on the transparent film, and polymerizing the composition. Alternatively, the nonwoven or the strands can be laminated between the upper and lower layers, or they can be laminated to the exposed surface of either layer. Preferably, the strands or the nonwovens are laminated to the exposed surface of the lower layer.

Furthermore, a polymeric film may be situated between the upper layer and lower layer to improve handlability of the sheet material and to distribute the expansion force as the lower layer expands to improve aesthetics of the cured sheet material. The film may also be attached to the exposed surface of the lower layer.

Useful films include those made from polyesters, acrylates, polyamides, polyimides, polypropylenes, and nylons. Metal foils, such as aluminum foil, and nonwovens, such as nonwoven polyester, can also be used for this purpose.

When the surface of the lower layer is not pressure sensitive at the application temperature, e.g., tacky at room temperature, a pressure sensitive adhesive or pressure sensitive adhesive transfer tape may be applied to part of, or the entire surface of, the lower layer. Commercially available pressure sensitive adhesive transfer tapes include 467 and 468 tapes from Minnesota Mining and Manufacturing Company.

The upper layer preferentially encapsulates the lower layer and the substrate after heating, but embodiments in which the lower layer is not encapsulated are also useful. The use of a nonencapsulated lower layer is facilitated by the application of paint to the sheet material. The paint strengthens the sheet material 80 that these less preferred embodiments of the invention become more durable.

The sheet material may also comprise more than two layers which comprise melt-flowable compositions. Three layer constructions may be envisaged in which the layers are arranged in various orders. For instance, non-expandable layer/expandable layer/non-expandable layer (upper/middle/lower) and non-expandable layer/non-expandable layer/expandable layer constructions, among others, work as well as two layer constructions.

The sheet materials of the present invention have a number of applications in industry. One utility is in the automotive industry where they can be utilized in a process to seal metal joints in automobiles. By this process, one first prepares a sheet material such as by the below-described processes. Subsequently, the sheet material would be applied over the joint to be sealed. In a preferred embodiment, complete sealing and bonding would be obtained because the lower layer of the sheet material flows and expands and the upper layer flows to encapsulate the lower layer prior to hardening. As a result of this expansion and flow, an aesthetic surface appearance is achieved. The exposed surface of the hardened sheet material can then be painted or otherwise decorated to match the automobile body.

In some cases it is desirable for the upper-layer to have a higher initiation temperature than the lower layer. The initiation temperature is defined as the temperature at which the epoxy starts to cure, and is determined using a differential scanning calorimeter (Perkin-Elmer DSC-2C) using a ramp speed of 10°C per minute. When the lower layer cures first, the upper layer remains sufficiently fluid to flow over and cover the lower layer.

The invention also provides a method for imparting topographical or protective features to a substrate comprising the steps of:
(a) providing a sheet material according to the present invention in a predetermined configuration;
(b) contacting and adhering the bottom surface to said substrate leaving the top surface exposed;
(c) heating said sheet material to effect expansion of said lower layer and to substantially thermoset and harden said lower layer and said upper layer in a fashion permitting said upper layer to flow.

According to a preferred method, said substrate is primed or unprimed metal.

According to another preferred method, said substrate is primed or unprimed metallic portion of an automobile body.

According to another preferred method, said substrate is a primed or unprimed metal joint of an automobile body.

According to another preferred method, said melt-flowable sheet material further comprises a polymeric film between said upper layer and said lower layer.

When said upper layer flows laterally such that said layer is essentially encapsulated by said substrate and said upper layer, the invention provides a method for imparting topographical or protective features to a substrate comprising the steps of:
(a) providing a sheet material in a predetermined configuration;
(b) contacting and adhering the bottom surface to said substrate leaving the top surface exposed;
(c) heating said sheet material to effect expansion of said lower layer and to substantially thermoset and harden said lower layer and said upper layer in a fashion permitting said upper layer to flow laterally thereby essentially encapsulating said lower layer by said upper layer and said substrate.

The invention is further illustrated by the following non-limiting examples in which all parts are expressed as parts by weight unless otherwise indicated.

### TESTS

### PAINTABILITY

A piece of tape measuring 2.5 cm by 2.5 cm is adhered to a 5.0 cm by 10.2 cm ED-11 panel (electrodeposition primed steel panel available from Advanced Coating Technologies, Inc.). The panel is cured at 177°C for 12 minutes. The tape and panel are coated with a base coat (HWB90394 Bright White from PPG Ind., Inc.) and dried at room temperature for about one hour. A clear coat (NCT II from PPG Ind., Inc.) is then coated over the base coat and the panel is placed in a 121°C oven for 30 minutes. The painted tape is checked for wrinkling of the paint surface and recorded as OK (no wrinkling) or FAIL (wrinkling).

### WEATHERING TEST

This test measures the change in paint color due to exposure or "weathering" in a particular environment. Two panels are prepared for each example according to the procedure described for PAINTABILITY (painted white). One sample is then aged in a weathering chamber ("QUV" from Q-Panel Co.) for 250 hours according to ASTM G-53 with repeating cycles of 4 hours of UV light at 60°C followed by 4 hours condensing humidity at 50°C. The other similarly prepared panel is kept at room temperature in the dark. After 250 hours the exposed and unexposed panels are measured for color values using an ACS Spectro-Sensor II spectrophotometer and associated computer (from Applied Color Systems, Inc.). The total color difference is calculated on the computer and is recorded as Delta E under weathering (WTH). Low values of Delta E are desired since they indicate less color change.

### MELT FLOW

This test measures the amount of flow that the tape exhibits as it cures. A 2.5 cm by 2.5 cm square piece of tape is placed at the top edge of a 5.0 cm by 10.2 cm anodized aluminum panel. A 2.5 cm by 5.0 cm strip of anodized aluminum is weighed (Wt) and then pressed lightly onto the tape. The panel is hung vertically in a 177°C panel for 12 minutes. The panel is removed from the oven and the amount of flow is measured by the distance that the strip has moved down from the top of the panel. The distance is recorded in centimeters (cm). A distance of 11+ indicates that the strip moved completely off of the panel.

### OVERLAP SHEAR

A 1.25 cm by 2.5 cm strip of the tape is adhered between the overlapping ends of two ED-11 panels measuring 2.5 cm by 5 cm such that the free ends of the panels extend in opposing directions and the length of the tape is placed across the lengths of the panels. The sample is rolled down with two passes of a 6.8 kg roller.

For initial results (INIT), the sample is conditioned at room temperature for 20 minutes, then the opposing ends of the panels are clamped into the opposing jaws of an Instron Tensile Tester, and pulled at a rate of 5 cm/min. The force at adhesive failure is recorded in Newtons/square centimeter (N/cm²) or MegaPascals (MPa).

For shear strength after curing (CURED), the sample is heated to 177°C for 12 minutes, held at room temperature for 5 minutes, heated to 121°C for 30 minutes, and cooled to room temperature before testing as described above.

### 90° PEEL ADHESION

A 1.25 cm by 15.2 cm strip of tape was laminated to a 0.13 mm thick strip of anodized aluminum. The strip is then laminated to an ED-11 panel described above and rolled down with 2 passes of a 2 kg roller. The panel is then attached to a fixture on an Instron so that the aluminum foil is pulled off at a 90° angle. The aluminum foil is pulled off at a speed of 30.48 cm per minute. The peel adhesion is recorded in Newtons per decimeter (N/dm).

### TENSILE STRENGTH AND ELONGATION

The tape is cured at 120°C for 30 minutes and cooled to room temperature. A dumbbell shaped sample (prepared according to ASTM D-412) is clamped into the jaws of an Instron Tensile Tester. The jaws are separated at a speed of 50.8 cm per minute. The tensile force (TENS) at break in Newtons/square centimeter (N/cm²) and elongation (ELON) in % at break are recorded.

For TESTS C, D, E, and F in Tables 5 and 6, the sheet was cured for 20 minutes at 177°C. The tensile strength and elongation are determined according to ASTM D412-87 on an Instron™Tensile Tester, using the described sample length of 33.27 mm., and a jaw separation speed of 50.8 centimeters per minute. The samples are conditioned at least 24 hours after curing before testing. Tensile results are reported in megaPascals (MPa) and elongation is reported in percent of the original length (%).

### EXPANSION

The thickness of the tape is measured before heat curing and after heat curing and expansion. The difference in thickness in millimeters (mm) is recorded.

### STORAGE MODULUS

This test measures the modulus of a tape. The test is performed on a sample that is 25 mm in diameter and 1.5 to 2.0 mm thick. The test is conducted on a Rheometrics Dynamic Analyzer II available from Rheometrics, Inc., using a parallel plate geometry at 25°C, and a frequency of 10 radians per second. The storage modulus (G') is recorded in dynes/cm².

Paint Adhesion : A sample measuring about 2.54 cm by 7.5 cm is applied to a PPG ED-11 electro-coated steel panel and heated at 177°C for 12 minutes. The panel is then coated with a base coat HWB90394 (white from PPG Industries, Inc.) and baked in an oven at 121°C for 30 minutes. A 2-part clear coat (Part A is CNCT2AH, Part B is CNCT2BE, from PPG Industries, Inc.) is mixed by hand according to the manufacturer's instructions and spray painted onto the base coat and cured at 177°C for 12 minutes. The painted panel is then cooled to room temperature and conditioned for at least 16 hours. The paint is then tested for Paint adhesion by cross hatching the cured paint surface and testing for adhesion of the paint to the sheet. The test is conducted according to ASTM D-3359-90. The test results are reported as a percentage of the paint surface that is left intact on the sheet.

Cured Hardness: The hardness of a sample cured for 20 minutes at 177°C is determined using a Shore A hardness tester and the test results are reported in Shore A hardness.

### GLOSSARY

- BA -: butyl acrylate
- B60 - Butyl methacrylate/methyl methacrylate copolymer with T_{g}=75°C (Acryloid™B-60 available from Rohm and Haas Co.)
- B66 -: n-butyl methacrylate/methyl methacrylate copolymer with T_{g}=50°C (Acryloid™B-66 available from Rohm and Haas Co.)
- B67 -: isobutyl methacrylate polymer with T_{g}=50°^{C} (Acryloid™B-67 available from Rohm and Haas Co.)
- B72 -: ethyl methacrylate copolymer with T_{g}=40°C (Acryloid™B-72 available from Rohm and Haas Co.)
- B82 -: methyl methacrylate copolymer with T_{g}=35°C (Acryloid™B-82 available from Rohm and Haas Co.)
- CDDGE -: 1,4-Cyclohexane dimethanol diglycidyl ether (Heloxy™107 from Rhone-Poulenc)
- DGEBA -: diglycidyl ether of bisphenol-A (Epon™828 from Shell Chemical Co.)
- DGEOBA -: diglycidyl ether oligomer of bisphenol A (EPON™1001F from Shell Chemical Co.)
- DICY -: micronized dicyandiamide (DYHARD™ 100 available from SKW Chemical)
- HDGEBA -: hydrogenated diglycidyl ether of bisphenol A (Eponex™1510 from Shell Chemical Co.)
- HINP -: hexakis imidazole nickel phthalate
- IRGACURE™651 -: 2,2-dimethoxy-2-phenyl acetophenone photoinitiator (available from Ciba Geigy)
- KB-1 -: benzil dimethyl ketal photoinitiator (Escacure™KB-1 from Sartomer)
- NVC -: N-vinyl caprolactam
- TDI -: 1,1'-(4-methyl-m-phenylene)-bis(3,3'-dimethylurea -(Omicure™24 from Omicron Chemicals)
- NNDMA -: N,N-Dimethylacrylamide (Jarchem)
- Tone™0240 -: Polycaprolactone diol (Union Carbide; M.W. = 2000)
- Tone™P767E -: Polycaprolactone polymer (Union Carbide)
- Dynapol™S1402 -: Polyester copolymer (Hüls, America)
- KB-1 -: Esacure KB-1 - Benzil dimethyl ketal (Sartomer)
- Irg 1010 -: Irganox™1010 Antioxidant (Ciba-Geigy)
- 2MZ Azine -: Curezol™2MZ Azine - 2,4-Diamino-6 [2'-methylimidazolyl-(1')] ethyl-s-triazine (Air Products)
- C15-250 -: glass microspheres (Minnesota Mining & Manufacturing Co.)
- CBr₄ -: carbon tetrabromide

### Examples 1-14

Tapes were prepared as described below using the specific amounts of the materials in each of the formulations as shown in Table 1. A 50/50 mixture of BA and NVC was heated to about 50°C to form a solution. More BA was added so that the total amount of BA was equal to the amount shown in the table. The solution was placed in a jar with HDGEBA and B60. The jar was placed on a roller mill overnight to dissolve the B60. After the B60 was dissolved, the following materials were added: photoinitiator - 0.14 pha (parts per hundred parts BA and NVC combined) Irgacure™651; epoxy curing agents - 7.5 phr (parts per hundred parts of epoxy resin) DICY, and 6.2 phr TDI; and 4 parts of hydrophilic fumed silica (Aerosil 200 available from DeGussa). The composition was mixed with a high shear mixer for about 15 minutes, degassed, and knife coated to a thickness of about 1.1 mm onto a 0.05 mm thick silicone coated polyester liner and covered with a similar liner. The coated composition was photopolymerized to form a sheet using ultraviolet light sources having 90% of the emissions between 300 to 400 nm with a maximum at 351. The light intensity was 1.54 mW/cm² above the web and 1.54 mW/cm² below the web as measured with a UVIRAD radiometer (Model No. VR365CH3) from E.I.T. (Electronic Instrumentation & Technology, Inc.). The total energy was 397 mJ/cm² above the web and 386 mJ/cm² below the web. The sheet was then cut into tapes and tested for peel adhesion, tensile strength and elongation, overlap shear strength, weathering, and melt flow according to the above test procedures. Test results are shown in TABLE 1. All of the samples were OK for paintability.

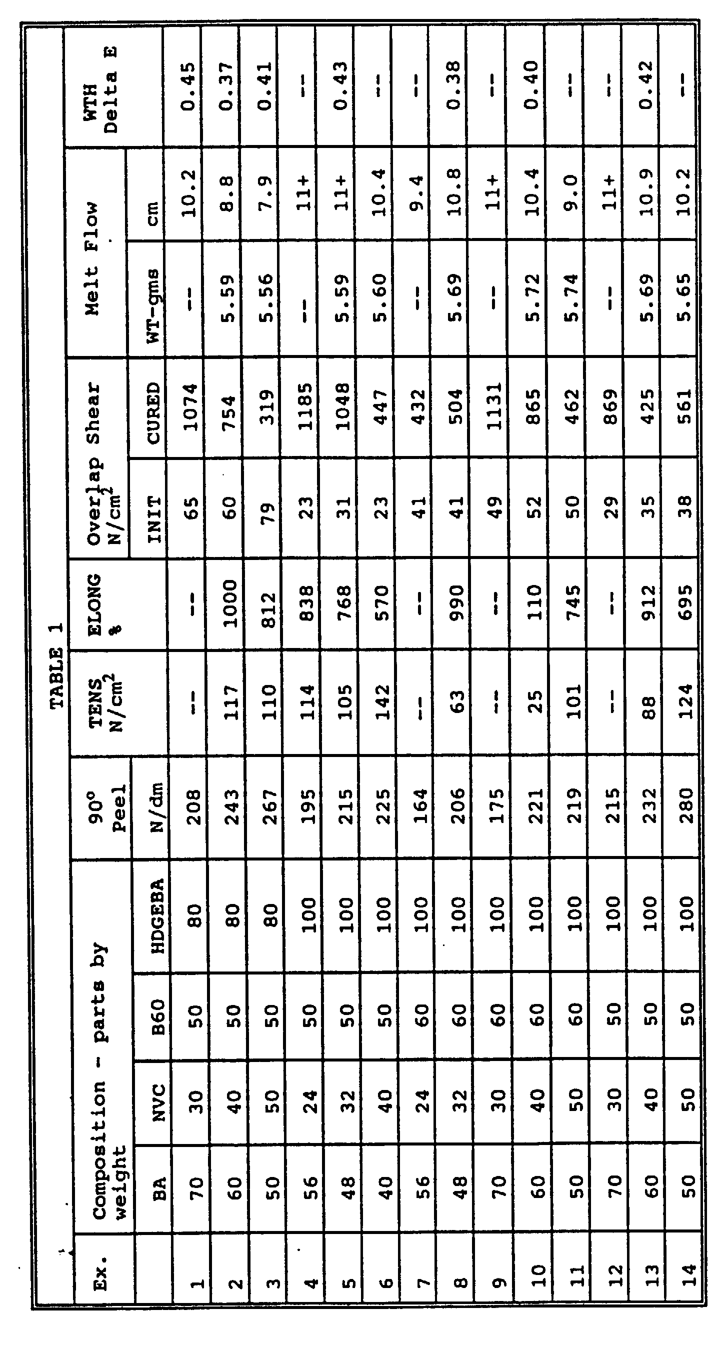

The data in Table 1 show that these tapes have adequate tensile strength, good overlap shear properties, and good melt flow before curing to a thermoset state.

### Examples 15-23

Tapes were made as described for Example 1 with the compositions shown in Table 2 except as follows: 0.14 pha of KB-1 was used as the photoinitiator; the epoxy curing agents were 4.5 phr DICY and 1.0 phr HINP; and instead of Aerosil™200, 5.0 parts of Cab-O-Sil M5 silica from Cabot Corp. was used. Example 19 was prepared with a different epoxy - CDDGE. In Examples 20-23 different copolymers were used as follows: Example 20 - B67; Example 21 - B72; Example 22 - B82, Example 23 - B66. Test results are shown in TABLE 2. The tapes were OK for paintability.

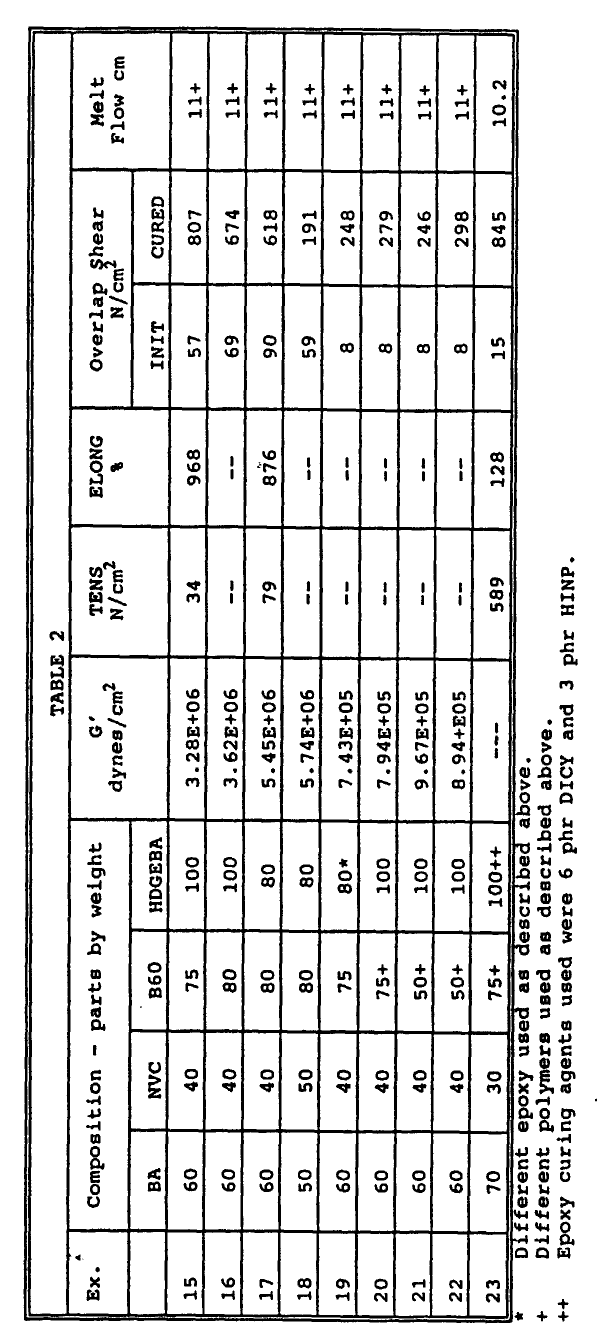

The data in TABLE 2 show that the tape flows at 177°C and cures to provide adequate overlap shear properties.

### Example 24

A three-layer tape was constructed having an expandable layer, a flowable layer that is also weatherable, and a film between the expandable and flowable layers. The flowable layer was prepared by mixing 40 parts BA and 40 parts NVC and heating to about 50°C to form a solution. The solution was placed in a jar and 20 parts BA, 80 parts B60, and 80 parts HDGEBA were added to form a mixture. The jar was then capped and placed on a roller mill overnight to dissolve the B60. To the mixture were added 0.14 parts KB-1 photoinitiator, 0.10 parts of an antioxidant (Irganox™1010 from Ciba Geigy ), 4.5 parts DICY, 1.0 part HINP, and 5 parts Cab-O-Sil M5. After mixing with a high speed mixer for about 15 minutes, the mixture was degassed and coated to a thickness of about 1.5 mm onto a 0.05 mm thick silicone coated polyester release liner. A 0.025 mm thick polyester film that was primed on both sides was placed on top of the coated mixture. The primer was an aqueous dispersion of colloidal silica having 25% Nalco 2326 (from Nalco Chemical Co.), 0.3% 3-aminopropyltriethoxysilane, and 0.03% Triton X-100 (from Rohm & Haas) in deionized water. The coated mixture was photopolymerized to form a sheet using ultraviolet light sources having 90% of the emissions between 300 to 400 nm with a maximum at 351. The light intensity was 2.40 mW/cm² above the web and 1.50 mW/cm² below the web as measured with a UVIRAD radiometer (Model No. VR365CH3) from E.I.T. (Electronic Instrumentation & Technology, Inc.). The total energy was 401 mJ/cm² above the web and 251 mJ/cm² below the web. The tested tape had a tensile strength (INIT) of 89 N/cm² and elongation of 840% at room temperature and tensile strength (CURED) of 574 N/cm² and elongation of 50% after heating as described in the above test.

The expandable layer was prepared by mixing 20 parts BA with 20 parts NVC and heating to about 50°C to form a solution. The solution was placed in a jar with 60 parts BA, 80 parts DGEOBA, and 20 parts DGEBA. The jar was capped and left on a roller mill overnight. To the mixture was then added 0.1 part KB-1, 0.8 part carbon tetrabromide, 4.5 parts DICY, 1.0 part HINP, 0.60 part 2,2'-Azobis-2-methylbutyronitrile (Vazo 67 from DuPont Company), 0.15 part glycidoxypropyltrimethoxysilane (G6720 from Hüls America, Inc.), 8 parts Aerosil R-972, 2.5 parts Cab-O-Sil M5, and 4 parts glass bubbles (C15-250 glass bubbles available from Minnesota Mining and Manufacturing Co.). The mixture was mixed vigorously, then degassed, and knife coated to a thickness of about 0.5 mm onto a 0.05 mm thick silicone coated polyester release liner. A 0.05 mm thick silicone coated polyester release liner was placed over the coated mixture and the mixture was cured as described above for the flowable layer. The light intensity was 2.38 mW/cm² above the web and 1.49 mW/cm² below the web. The total energy was 281 mJ/cm² above the web and 176 mJ/cm² below the web.

A 2.02 mm thick three-layer composite was made by removing one of the release liners from the expandable layer and laminating the expandable layer to the other primed surface of the polyester film that was adhered to the flowable layer.

A 1.9 cm by 7.6 cm tape was cut from the composite for testing. The expandable layer side of the tape was applied to an ED-11 panel and the other release liner on the flowable side was removed. The panel with the tape was heated at 177°C for 12 minutes. After cooling and cutting apart the tape, it was found that the top layer had flowed to cover the exposed surfaces of both the polyester film and the bottom expandable layer so that all of the exposed surfaces of the tape were weatherable. The thickness of the tape increased from 2.02 to 2.5 mm.

### Examples 25-30

A melt sealing composition for a top layer was prepared, according to the procedure of Example 24, having a composition of 60 parts BA, 40 parts NVC, 80 parts HDGEBA, 80 parts B60, 0.16 part KB-1, 6 parts DICY, 3 parts 2MZ Azine (from Air Products), and 4.5 parts Cab-O-Sil M5. The composition was coated between two release treated polyester liners and cured as in Example 24. An expandable composition for a lower layer was prepared, according to the procedure of Example 24, having a composition of 80 parts BA, 20 parts N,N-dimethylacrylamide, 20 parts DGEBA, 80 parts DGEOBA, 20 parts B60, 0.1 part KB-1, 0.4 parts carbon tetrabromide, 0.6 part 1.1-azobis(cyclohexane carbonitrile), (Vazo 88) 0.15 part glycidoxypropyltrimethoxysilane, 4.5 parts DICY, 1.0 part HINP, 2 parts Cab-O-Sil M5, and 4 parts Aerosil R972 (available from DeGussa). The composition was coated to a thickness of about 0.51 mm and cured as described above for the upper layer.

Reinforcing layers, shown in TABLE 3, were laminated at room temperature between the two layers for examples 26-30. Example 25 did not have a reinforcing film.

The reinforcing film of Example 30 was prepared by mixing 80 parts isooctyl acrylate, 20 parts acrylic acid, and 0.04 part Irgacure™651, and polymerizing to a coatable viscosity of about 3000 cps using ultraviolet black lights. The partially polymerized mixture was then coated to a thickness of 0.13 mm between release treated polyester films, and cured as described above for the top and lower layers.

Samples measuring 2.5 cm by 7.5 cm were cut from each of the sheets and placed on 5 cm by 10 cm steel panels that had been electro-coated with PPG-ED-11 (from Advanced Coatings Technology, Inc.). The sheets were thermoset at 177°C for 20 minutes. After cooling, the samples were examined for sealing and appearance. All of the samples exhibited complete encapsulation and sealing of the lower layer by the upper layer. Examples 26-30 had a smooth surface after thermosetting, while Example 25 had a rough surface.

**TABLE 3**

| Ex | Reinforcing Film |
|---|---|
| 25 | None |
| 26 | Polyester Film from Example 23 |
| 27 | Reemay T706 Nonwoven from Reemay Co. |
| 28 | 0.13 mm thick aluminum foil from All Foils, Inc. |
| 29 | 0.51 mm thick polyimide film (Apical 200 AV from Allied Signal) |
| 30 | Acrylate film |

### Example 31

A composition for a 1 mm thick expandable layer was prepared by mixing 15 parts butyl acrylate, 85 parts N-vinyl pyrrolidone, and 0.04 parts of Irgacure™651 in a jar, purging with nitrogen, and partially polymerizing with an ultraviolet black light to a viscosity of about 3000 cps. The following were added with continuous mixing: 0.1 parts Irgacure™ 651, 85 parts DGEOBA with an epoxy equivalent weight of 500, 15 parts DGEBA, 7 parts dicyandiamide (CG1200 from Omicron Chemical Co.), 2.5 parts 2,4-diamino-6-(2'-methyl-imidazoyl)-ethyl-S-triazine isocyanurate (2MA-OK from Shikoku Chemical Co. Ltd.), 7 parts silica (Aerosil™R-972 from DeGussa), 5.5 parts glass bubbles (C15/250 Glass bubbles from Minnesota Mining and Manufacturing Co.), 0.4 part polydimethylsiloxane (TSF-451-1000 from Toshiba Silicone Co. Ltd.), 4 parts foaming agent (Microcapsule F-50 from Matsumoto), and 0.05 part mercaptoproionic acid. After mixing, the composition was degassed, coated to a thickness of 1 mm, and cured as described in Example 1 using a light intensity of 1.76 mW/cm² on the top and bottom and 975 mJ/cm² total energy, to form an expandable layer. The expandable layer had an initiation temperature of 145°C (determined by DSC as described above).

A 1 mm thick melt flowable layer was prepared as described above for the expandable layer except that DICY, 2MA-OK, and the foaming agent were not used, and 15 parts of adipic acid dihydrazide were added to the composition as the epoxy curative. The melt flowable layer had an initiation temperature of 175°C.

A sheet material was prepared by laminating the melt flowable layer to the expandable layer with a hand held roller to form a 2 mm thick sheet. A sample was placed on an ED-coated panel with the expandable layer against the panel, and cured at 150°C for 20 minutes. The surface of the cured sheet was smooth and free of wrinkles.

### Examples 32-35

A composition for a melt flowable layer (A) was prepared by mixing 72 parts BA, 28 parts N,N-dimethylacrylamide (NNDMA), and 0.04 parts Irgacure™651. The mixture was partially polymerized as described in Example 30. The following were added to the mixture: 0.1 part Irgacure™651, 2.0 parts glycidyl methacrylate, 60 parts Epon™1001 (from Shell Chemical Co.), 20 parts DGEBA, 6 parts CG1200, 2 parts 2MA-OK, 4 parts Aerosil R972, 4 parts C15/250 glass bubbles, and 0.2 parts 3-mercaptopropionic acid. The composition was mixed, degassed, coated to a thickness of 1 mm, and cured as in Example 31.

Layer B was prepared as for Layer A with the following changes in the composition: 80 parts BA, 20 parts NNDMA, 3 parts glycidyl methacrylate, 85 parts Epon™1001, 15 parts DGEBA, 7 parts CG1200, 2.5 parts 2MA-OK, and 1.2 parts of a blowing agent (AZ-M3 from Ohtsuka Chemical).

Layer C was prepared as for Layer B with the following changes in the composition: 2.0 parts 2MA-OK were used and the blowing agent was omitted.

The sheet materials were prepared by laminating the layers as shown in Table 4 with a hand roller. Samples were laminated to ED-11 coated steel panels and cured at 140°C for 20 minutes. Samples were cooled to room temperature before testing shown in Table 4.

**Table 4**

| | Ex 32 | Ex 33 | Ex 34 | Ex 35 |
|---|---|---|---|---|
| Top Layer | A | C | A | B |
| Middle Layer | None | None | B | None |
| Bottom Layer | B | B | C | A |
| Hardness* | 96 | 89 | 96 | 86 |
| Appearance** | Smooth | Smooth | Smooth | Textured |
| Gap*** | None | None | None | None |

| | | | | |
|---|---|---|---|---|
| *Hardness determined by JIS-A Type Hardness Tester | | | | |
| **Appearance judged visually as smooth or textured | | | | |
| ***None indicates that the sheet material flowed during thermal curing in a U-shaped roof channel to seal the channel and provide an aesthetic surface | | | | |

### Example 36

An expandable layer was prepared by mixing 80 parts BA, 20 parts NNDMA, 80 parts DGEOBA, 20 parts DGEBA, 5.0 parts polycaprolactone (Tone™767E available from Union Carbide), 2.8 parts DICY, 1.2 parts HINP, 0.16 part KB-1, 0.1 part Irganox™1010, 0.4 part CBr₄, 0.05 part hexanedioldiacrylate, 1.0 part 1,1-azobis(cyclohexanecarbonitrile) (Vazo 88 from DuPont), 0.15 part glycidoxypropyltrimethoxysilane, 4.0 parts C15/250 glass bubbles, and 4.0 parts Cab-O-Sil M5. The mixture was then degassed, and knife coated to a thickness of about 1 mm between 0.05 mm thick silicone coated polyester films, and cured as described in Example 1. The light intensity was 2.25 mW/cm² above the web and 1.77 mW/cm² below the web. The total energy above the web was 225 mJ/cm² and 177 mJ/cm² below the web.

A melt flowable layer was prepared according to the procedure of Example 1 with the following composition: 60 parts BA, 40 parts NVC, 80 parts B60, 80 parts HDGEBA, 0.14 part KB-1, 0.10 part Irganox™1010, 6 parts DICY, 3 parts 2MZ Azine, and 4.5 parts Cab-O-Sil M5. After the mixed composition was degassed, the top film was removed from the expandable layer and the composition for the melt flowable layer was knife coated to a thickness of 1.25 mm on top of the expandable layer, and covered with a 0.05 mm thick silicone coated film. The coated sheet was cured with lamps described in Example 1 with light intensity of 2.3 mW/cm² above the web and 2.1 mW/cm² below the web. The total energy was 550 mJ/cm² above the web and 503 mJ/cm² below the web.

The film was removed from the expandable layer side of a sample measuring 1.9 cm by 7.6 cm, and the expandable layer was laminated to a steel panel that had been electro-coated with PPG-ED-5100 (from Advanced Coatings Technology, Inc.). The film from the melt flowable side was then removed and the sample was heated at 177°C for 12 minutes. After cooling, the sample was examined for sealing and appearance. The lower layer of the sample was completely encapsulated and sealed by the upper layer to produce a smooth, paintable, and weatherable surface after thermosetting.

### Examples 37-44

The layers for these examples can be used as either an upper layer or a lower layer in a sheet construction. For each example, a composition was formed by mixing 80 parts BA, 20 parts NNDMA, and 80 parts Epon™1001. Various polycaprolactone diols were added in the parts by weight shown in Table 5. The polycaprolactone polyols were heated to about 70°C before adding to the epoxy/acrylate mixture. The remaining ingredients were added using a high shear mixer: 0.16 part KB-1, 0.1 part Irganox™1010, 2.8 parts DICY, 1.2 parts HINP, 4 parts C15/250 glass bubbles, and 4 parts Cab-O-Sil M5 silica.

After degassing under vacuum the mixtures were knife-coated to a thickness of 2 mm between two 0.05 mm silicone coated polyester release liners. The coated mixtures were cured with ultraviolet lights as described in Example 1 with a total energy of 341 mJ/cm² above the web and 310 mJ/cm² below the sheet. The intensity was 1.87 mW/cm² above the sheet and 1.66 mW/cm² below the sheet.

The layers were tested for tensile strength, elongation, and vertical flow and results in Table 5 show how polycaprolactone polyols can be used to modify the flow properties as well as the physical properties of the sheet.

**Table 5**

| Example | 37 | 38 | 39 | 40 | 41 | 42 | 43 | 44 |
|---|---|---|---|---|---|---|---|---|
| TONE™0200 | - | 10 | - | - | - | - | - | - |
| TONE™0240 | - | - | 10 | 20 | - | - | - | - |
| TONE™0230 | - | - | - | - | 10 | - | - | - |
| TONE™0240 | - | - | - | - | - | 10 | 20 | - |
| TONE™0260 | - | - | - | - | - | - | - | 10 |
| TEST A | 55.7 | 315 | 175 | 371 | 140 | 109 | 193 | 91 |
| TEST B | 3.5 | 4.4 | 3.5 | 4.3 | 3.8 | 2.1 | 5.1 | 4.9 |
| TEST C | .1* | .2* | .3* | .2* | .4* | .5* | .4* | .7* |
| TEST D | 792 | 134 | 644 | 64 | 1009 | 954 | 65 | 797 |
| TEST E | 2.7 | 3.2 | 2.9 | 3.9 | 3.8 | 4.1 | 6.3 | 5.4 |
| TEST F | 84 | 30 | 22 | 10 | 35 | 18 | 5 | 9 |
| TEST G | 70 | 85 | 88 | 87 | 85 | 87 | 86 | 92 |
| TEST H | 10 | 22 | 18 | 24 | 15 | 7 | 9 | 4 |
| TEST I | 100 | 100 | 100 | 100 | 100 | 100 | 100 | 100 |

| | | | | | | | | |
|---|---|---|---|---|---|---|---|---|
| * Sample did not break; peak elongation reported TEST A - 90° Peel - N/dm TEST B - Cured Overlap Shear Strength - MPA TEST C - Initial Tensile Strength - MPa TEST D - Initial Elongation - % TEST E - Cured Tensile Strength - MPa TEST F - Cured Elongation - % TEST G - Cured Hardness - Shore A hardness tester) TEST H - Vertical Flow - mm TEST I - Paint Adhesion | | | | | | | | |

### Examples 45 - 50

Single layers were prepared using a polyester polymer (Dynapol™S1402) and polycaprolactone polymers (TONE™300 and TONE™P767E) to alter the properties of the sheet materials in these examples. The layers can be used as either the upper layer or the bottom layer. The basic formulations were the same for all of the examples but different amounts and types of polymers were added as shown in Table 6. Materials used in the basic formulation were: BA - 80; NNDMA - 20; EPON™1001 - 80; KB-1 - 0.16; DICY - 2.8; HINP - 1.2; C15-250 - 4; Cab-O-Sil 5 - 4. The polymers were mixed with the BA, NNDMA, and epoxy and heated, with occasional agitation, to about 70°C to melt the polymers and form molten solutions. The remaining components (catalyst, accelerator, photoinitiator, and fillers) were added to the solutions (which had been cooled to room temperature) with a high shear mixer and degassed. Sheets (2.0 mm thick) were prepared as described in Example 36. Examples 45-48 were cured with a total cure energy of 341 mJ/cm² above the web and 310 mJ/cm² below the web, and an intensity of 1.87 mW/cm² above the web and 1.66 mW/cm² below the web. Total energy for Examples 49-50 was 343 mJ/cm² above the web and 304 mJ/cm² below the web and the intensity was 2.07 mW/cm² above the web and 1.83 mW/cm² below the web.

**Table 6**

| Example | 45 | 46 | 47 | 48 | 49 | 50 |
|---|---|---|---|---|---|---|
| TONE™300 | - | 10 | 20 | - | - | - |
| TONE™P767E | - | - | - | 5 | - | - |
| DYNAPOL™S1402 | - | - | - | - | 5 | 10 |
| TEST A | 56 | 59.5 | 35 | 63 | 59.5 | 23.4 |
| TEST B | 3.5 | 2.6 | 0.7 | 2.2 | 2.6 | 3.4 |
| TEST C | 0.1 | 1.0 | 1.1 | 1.5 | 1.0 | 1.2 |
| TEST D | 792 | 833 | 630 | 943 | 833 | 832 |
| TEST E | 2.7 | 2.9 | 2.0 | 1.6 | 2.9 | 1.4 |
| TEST F | 84 | 115 | 340 | 212 | 115 | 150 |
| TEST G | 70 | 82 | 80 | 86 | 82 | 83 |
| TEST H | 10 | 4 | 18 | 5 | 4 | 3 |
| TEST I | 100 | 100 | 100 | 100 | 100 | 100 |
| NOTE: Tests are indicated under Table 5. | | | | | | |

### Example 51 - 53

An adduct of a diglycidyl ether of bisphenol A (DGEBA) and 2-isocyanatoethylmethacrylate (IEM) was prepared by charging the following materials, under a dry air atmosphere, to a 500-ml three-neck, round bottom flask equipped with a mechanical stirrer, reflux condenser, and a thermometer: 200 grams of Epon™828, 10.06 grams IEM (from Dow Chemical Co.), and 6 drops of dibutyl(tin)dilaurate. The flask was immersed in an oil bath and heated to 65°C for about 5 hours until no residual isocyanate could be detected by infrared. The reaction product (DGEBA/IEM adduct) was allowed to cool to room temperature and placed in an amber bottle. A 50/50 mixture of BA and NVC was heated to about 50°C to form a solution. A mixture (MIX) was prepared by mixing 400 parts of the BA/NVC solution, 600 parts BA, and 1000 parts Epon™1001. The mixture was further compounded with fillers and catalysts as shown in Table 11 and 2.0 mm thick sheets were prepared as described in Example 19. The sheet was substantially tack free. The test data in Table 11 indicate that the stiffness of the sheet material was significantly increased without affecting the melt flow properties.

**Table 7**

| Example | 51 | 52 | 53 |
|---|---|---|---|
| MIX | 1400 | 200 | 200 |
| KB-1 | 0.7 | 0.7 | 0.7 |
| IRG 1010 | 0.7 | 0.2 | 0.2 |
| DICY | 24.5 | 3.5 | 3.5 |
| HINP | 8.75 | 1.25 | 1.25 |
| CBr₄ | 5.6 | 0.8 | 0.8 |
| C15-250 | 28 | 4 | 4 |
| M5 | 35 | 5 | 5 |
| DGEBA/IEM ADDUCT | 0 | 5 | 10 |
| Melt Flow | 3 | 3 | 3 |
| Cured Overlap Shear - MPa* | 836 | 777 | 700 |
| Stiffness Ratio** - Torque/Viscous modulus(inch pounds) | 0.0/0.0 | 0.24/0.08 | 1.53/0.29 |

| | | | |
|---|---|---|---|
| * All failures were cohesive | | | |
| ** Stiffness ratio calculated on a Monsanto MDR (moving die rheometer); run conditions - oscillating at 0.5° at 177°C for 30 minutes | | | |

### Example 54

A three layer sheet material was made according to the procedure described in Example 36. The melt flowable layer had the same composition as the melt flowable layer of Example 36 and was coated to a thickness of 1.5 mm. The light intensity was 2.46 mW/cm² above the web and 2.03 mW/cm² below the web. The total energy was 354 above the web and 292 mW/cm² below the web.

A pressure sensitive expandable layer had the same composition as the expandable layer of Example 36 except that it was knife coated to a thickness of 0.12 mm and cured with a light intensity of 2.21 mW/cm² above the web and 1.76 mW/cm² below the web. The total energy was 168 above the web and 134 mW/cm² below the web.

An expandable layer with the same composition as the expandable layer of Example 36 except that 1 part hexanediol diacrylate was used, and the composition was coated to a thickness of 0.75 mm. The composition was cured with a light intensity of 2.20 mW/cm² above the web and 1.75 mW/cm² below the web. The total energy was 251 mW/cm² above the web and 200 mW/cm² below the web.

The sheet material was prepared by laminating the pressure sensitive expandable layer to the expandable layer, and then laminating the melt flowable layer to the exposed surface of the expandable layer. The sheet material was thermoset as described in Example 36. After cooling, the sample exhibited good bond to the pane, and complete encapsulation and sealing of the expandable and pressure sensitive layers by the melt flowable layer to produce a smooth, paintable, and weatherable surface.

## Claims

1. A latent, thermosettable, melt-flowable sheet material, having a top surface and a bottom surface, comprising two or more layers, comprising an upper layer and a lower layer, said upper layer comprising a latent, thermosettable, melt-flowable composition, and said lower layer comprising a latent, expandable, thermosettable melt-flowable composition, wherein upon application of said sheet material to a substrate by contacting said bottom surface therewith, and heating to an elevated temperature, said lower layer expands and said upper layer flows.

2. A latent, thermosettable, melt-flowable sheet material according to Claim 1, wherein said upper layer flows laterally such that said lower layer is essentially encapsulated by said substrate and said upper layer.

3. A latent, thermosettable, melt-flowable sheet material according to Claim 1, further comprising a polymeric film between said upper layer and said lower layer.

4. A latent, thermosettable, melt-flowable sheet material according to Claim 1, wherein said melt-flowable composition of said upper layer and said melt-flowable composition of said lower layer each comprises a heat-activatable curing or crosslinking system which activates to harden said upper layer and said lower layer.

5. A latent, thermosettable, melt-flowable sheet material according to Claim 4, wherein said melt-flowable composition of said upper layer and said melt-flowable composition of said lower layer each comprises the photochemical reaction product of starting materials comprising (i) a prepolymeric or monomeric syrup comprising an acrylic or methacrylic acid ester; (ii) an epoxy resin; (iii) a photoinitiator; and (iv) a heat-activatable hardener for said epoxy resin.

6. A latent, thermosettable, melt-flowable sheet material according to Claim 5, wherein said starting materials in the case of said melt-flowable composition of said upper layer further comprise an acrylate copolymer to increase the hardness of the cured sheet material.

7. A latent, thermosettable, melt-flowable sheet material according to Claim 5, wherein said starting materials in the case of said melt-flowable composition of said lower layer further comprise a blowing or foaming agent or expandable spheres to provide for expansion of said lower layer upon heating.

8. A latent, thermosettable, melt-flowable sheet material according to Claim 4, wherein said melt-flowable composition of said upper layer and said melt-flowable composition of said lower layer each comprises the photochemical reaction product of starting materials comprising:
(a) 100 parts by weight of a prepolymeric or monomeric syrup comprising an alkyl acrylate or methacrylate wherein said alkyl moiety comprises about 4 to 12 carbon atoms;
(b) from about 25 to 150 parts by weight of an epoxy resin;
(c) from about 0.01 to 5 parts by weight of a photoinitiator; and
(d) from about 0.1 to 20 parts by weight of a heat-activatable hardener for said epoxy resin.

9. A latent, thermosettable, melt-flowable sheet material according to Claim 8, wherein said prepolymeric or monomeric syrup further comprises a reinforcing monomer copolymerizable with said alkyl acrylate or methacrylate.

10. A latent, thermosettable, melt-flowable sheet material according to Claim 9, wherein said reinforcing monomer is selected from the group consisting of isobornyl acrylate, N-vinyl caprolactam, N-vinylpyrrolidone, N-vinyl piperidine, N,N-dimethylacrylamide and acrylonitrile.

11. A latent, thermosettable, melt-flowable sheet material according to Claim 1, further comprising a release liner adhered to said bottom surface.

12. A latent, thermosettable, melt-flowable sheet material according to Claim 1 in the form of a tape.

13. A latent, thermosettable, melt-flowable sheet material according to Claim 1, wherein at least one of said starting materials of said melt-flowable composition of said upper layer or said lower layer further comprises a polyacetal polymer.

14. A latent, thermosettable, melt-flowable sheet material according to Claim 13, wherein said polyacetal polymer is poly(vinylbutyral).

15. A latent, thermosettable, melt-flowable sheet material according to Claim 1, wherein at least one of said starting materials ot said melt-flowable composition of said upper layer or said lower layer further comprises glycidyl methacrylate, glycidyl acrylate, or another epoxy functional monomer.

16. A latent, thermosettable, melt-flowable sheet material according to Claim 15, wherein at least one of said starting materials of said melt-flowable composition of said upper layer or said lower layer comprises glycidyl methacrylate or glycidyl acrylate.

17. A latent, thermosettable, melt-flowable sheet material according to Claim 1, further comprising a nonwoven fabric laminated to the bottom surface.

18. A latent, thermosettable, melt-flowable sheet material according to Claim 1, further comprising a pressure sensitive adhesive layer on the bottom surface.

19. A latent, thermosettable, melt-flowable sheet material according to Claim 3, wherein said polymeric film is selected from the group consisting of polyester film, nonwoven polyester, aluminum foil, polyimide film, acrylate film, nylon film, and polypropylene film.

20. A latent, thermosettable, melt-flowable sheet material according to Claim 19, wherein said polymeric film is an acrylate film.

21. A latent, thermosettable, melt-flowable sheet material according to Claim 1, wherein said upper layer has a higher initiation temperature than said lower layer.

22. A method for imparting topographical or protective features to a substrate comprising the steps of:
(a) providing a sheet material according to Claim 1 in a predetermined configuration;
(b) contacting and adhering the bottom surface to said substrate leaving the top surface exposed;
(c) heating said sheet material to effect expansion of said lower layer and to substantially thermoset and harden said lower layer and said upper layer in a fashion permitting said upper layer to flow.

23. A method for imparting topographical or protective features to a substrate comprising the steps of:
(a) providing a sheet material according to Claim 2 in a predetermined configuration;
(b) contacting and adhering the bottom surface to said substrate leaving the top surface exposed;
(c) heating said sheet material to effect expansion of said lower layer and to substantially thermoset and harden said lower layer and said upper layer in a fashion permitting said upper layer to flow laterally thereby essentially encapsulating said lower layer by said upper layer and said substrate.

24. A method according to Claim 22, wherein said substrate is primed or unprimed metal.

25. A method according to Claim 22, wherein said substrate is a primed or unprimed metallic portion of an automobile body.

26. A method according to Claim 22, wherein said substrate is a primed or unprimed metal joint of an automobile body.

27. A method according to Claim 22, wherein said melt-flowable sheet material further comprises a polymeric film between said upper layer and said lower layer.

28. A lattent, thermosettable, melt-flowable sheet material according to Claim 1, further comprising a nonwoven fabric between said upper layer and said lower layer.

## Patentansprüche

1. Latentes, wärmehärtbares, in der Schmelze fließfähiges Blattmaterial, das eine obere Oberfläche und eine untere Oberfläche aufweist, umfassend zwei oder mehr Schichten, die eine obere Schicht und eine untere Schicht umfassen, wobei die obere Schicht eine latente, wärmehärtbare, in der Schmelze fließfähige Zusammensetzung umfaßt, und die untere Oberfläche eine latente, verschäumbare, wärmehärtbare, in der Schmelze fließfähige Zusammensetzung umfaßt, worin beim Auftragen des Blattmaterials auf ein Substrat durch In-Kontakt-Bringen der unteren Oberfläche mit demselben und Erwärmen auf eine erhöhte Temperatur die untere Schicht verschäumt und die obere Schicht fließt.

2. Latentes, wärmehärtbares, in der Schmelze fließfähiges Blattmaterial gemäß Anspruch 1, worin die obere Schicht lateral fließt, so daß die untere Schicht im wesentlichen durch das Substrat und die obere Schicht eingekapselt wird.

3. Latentes, wärmehärtbares, in der Schmelze fließfähiges Blattmaterial gemäß Anspruch 1, das weiterhin eine polymere Folie zwischen der oberen Schicht und der unteren Schicht umfaßt.

4. Latentes, wärmehärtbares, in der Schmelze fließfähiges Blattmaterial gemäß Anspruch 1, worin die in der Schmelze fließfähige Zusammensetzung der oberen Schicht und die in der Schmelze fließfähige Zusammensetzung der unteren Schicht jeweils ein durch Wärme aktivierbares Härtungs- oder Vernetzungssystem umfassen, welches die Härtung der oberen Schicht und der unteren Schicht aktiviert.

5. Latentes, wärmehärtbares, in der Schmelze fließfähiges Blattmaterial gemäß Anspruch 4, worin die in der Schmelze fließfähige Zusammensetzung der oberen Schicht und die in der Schmelze fließfähige Zusammensetzung der unteren Schicht jeweils das photochemische Reaktionsprodukt der Ausgangsmaterialien umfassen, umfassend (i) einen prepolymeren oder monomeren Sirup, der einen Acryl- oder Methacrylsäureester umfaßt; (ii) ein Epoxyharz; (iii) einen Photoinitiator und (iv) ein durch Wärme aktivierbares Härtungsmittel für das Epoxyharz.

6. Latentes, wärmehärtbares, in der Schmelze fließfähiges Blattmaterial gemäß Anspruch 5, worin die Ausgangsmaterialien im Falle der in der Schmelze fließfähigen Zusammensetzung der oberen Schicht weiterhin ein Acrylat-Copolymer umfassen, um die Härte des gehärteten Blattmaterials zu erhöhen.

7. Latentes, wärmehärtbares, in der Schmelze fließfähiges Blattmaterial gemäß Anspruch 5, worin die Ausgangsmaterialien im Falle der in der Schmelze fließfähigen Zusammensetzung der unteren Schicht weiterhin ein Bläh- oder Verschäumungsmittel oder expandierbare Kügelchen umfassen, um eine Verschäumung der unteren Schicht beim Erwärmen bereitzustellen.

8. Latentes, wärmehärtbares, in der Schmelze fließfähiges Blattmaterial gemäß Anspruch 4, worin die in der Schmelze fließfähige Zusammensetzung der oberen Schicht und die in der Schmelze fließfähige Zusammensetzung der unteren Schicht jeweils das photochemische Reaktionsprodukt der Ausgangsmaterialien umfassen, umfassend:
(a) 100 Gewichtsteile eines prepolymeren oder monomeren Sirups, umfassend ein Alkylacrylat oder -methacrylat, worin der Alkylrest etwa 4 bis 12 Kohlenstoffatome umfaßt;
(b) etwa 25 bis 150 Gewichtsteile eines Epoxyharzes;
(c) etwa 0,01 bis 5 Gewichtsteile eines Photoinitiators; und
(d) etwa 0,1 bis 20 Gewichtsteile eines durch Wärme aktivierbaren Härtungsmittels für das Epoxyharz.

9. Latentes, wärmehärtbares, in der Schmelze fließfähiges Blattmaterial gemäß Anspruch 8, worin der prepolymere oder monomere Sirup weiterhin ein Verstärkungsmonomer umfaßt, das mit dem Alkylacrylat oder -methacrylat copolymerisierbar ist.

10. Latentes, wärmehärtbares, in der Schmelze fließfähiges Blattmaterial gemäß Anspruch 9, worin das Verstärkungsmonomer aus der aus Isobornylacrylat, N-Vinylcaprolactam, N-Vinylpyrrolidon, N-Vinylpiperidin, N,N-Dimethylacrylamid und Acrylnitril bestehenden Gruppe ausgewählt ist.

11. Latentes, wärmehärtbares, in der Schmelze fließfähiges Blattmaterial gemäß Anspruch 1, das weiterhin eine Abziehfolie umfaßt, die an der unteren Oberfläche haftet.

12. Latentes, wärmehärtbares, in der Schmelze fließfähiges Blattmaterial gemäß Anspruch 1 in Form eines Bandes.

13. Latentes, wärmehärtbares, in der Schmelze fließfähiges Blattmaterial gemäß Anspruch 1, worin wenigstens eines der Ausgangsmaterialien der in der Schmelze fließfähigen Zusammensetzung der oberen Schicht oder der unteren Schicht weiterhin ein Polyacetal-Polymer umfaßt.

14. Latentes, wärmehärtbares, in der Schmelze fließfähiges Blattmaterial gemäß Anspruch 13, worin das Polyacetal-Polymer Poly(vinylbutyral) ist.

15. Latentes, wärmehärtbares, in der Schmelze fließfähiges Blattmaterial gemäß Anspruch 1, worin wenigstens eines der Ausgangsmaterialien der in der Schmelze fließfähigen Zusammensetzung der oberen Schicht oder der unteren Schicht weiterhin Glycidylmethacrylat, Glycidylacrylat oder ein anderes Epoxy-funktionelles Monomer umfaßt.

16. Latentes, wärmehärtbares, in der Schmelze fließfähiges Blattmaterial gemäß Anspruch 15, worin wenigstens eines der Ausgangsmaterialien der in der Schmelze fließfähigen Zusammensetzung der oberen Schicht oder der unteren Schicht Glycidylmethacrylat oder Glycidylacrylat umfaßt.

17. Latentes, wärmehärtbares, in der Schmelze fließfähiges Blattmaterial gemäß Anspruch 1, das weiterhin ein an die untere Oberfläche laminiertes Faservlies umfaßt.

18. Latentes, wärmehärtbares, in der Schmelze fließfähiges Blattmaterial gemäß Anspruch 1, das weiterhin eine Haftklebstoffschicht an der unteren Oberfläche umfaßt.

19. Latentes, wärmehärtbares, in der Schmelze fließfähiges Blattmaterial gemäß Anspruch 3, worin die polymere Folie aus der aus Polyesterfolie, nichtgewebtem Polyester, Aluminiumfolie, Polyimidfolie, Acrylatfolie, Nylonfolie und Polypropylenfolie bestehenden Gruppe ausgewählt ist.

20. Latentes, wärmehärtbares, in der Schmelze fließfähiges Blattmaterial gemäß Anspruch 19, worin die polymere Folie eine Acrylatfolie ist.

21. Latentes, wärmehärtbares, in der Schmelze fließfähiges Blattmaterial gemäß Anspruch 1, worin die obere Schicht eine höhere Initiierungstemperatur als die untere Schicht hat.

22. Verfahren, um einem Substrat topographische oder schützende Merkmale zu verleihen, umfassend die Stufen:
(a) der Bereitstellung eines Blattmaterials gemäß Anspruch 1 in einer vorherbestimmten Konfiguration;
(b) des In-Kontakt-Bringens und Klebens der unteren Oberfläche an das Substrat, wobei die obere Oberfläche in freigelegter Form zurückbleibt;
(c) des Erwärmens des Blattmaterials, um eine Verschäumung der unteren Schicht zu bewirken und im wesentlichen die untere Schicht und die obere Schicht auf eine Weise wärmezuhärten und zu härten, die ein Fließen der oberen Schicht erlaubt.

23. Verfahren, um einem Substrat topographische oder schützende Merkmale zu verleihen, umfassend die Stufen:
(a) der Bereitstellung eines Blattmaterials gemäß Anspruch 2 in einer vorherbestimmten Konfiguration;
(b) des In-Kontakt-Bringens und Klebens der unteren Oberfläche an das Substrat, wobei die obere Oberfläche in freigelegter Form zurückbleibt;
(c) des Erwärmens des Blattmaterials, um eine Verschäumung der unteren Schicht zu bewirken und im wesentlichen die untere Schicht und die obere Schicht auf eine Weise wärmezuhärten und zu härten, die ein laterales Fließen der oberen Schicht erlaubt, wobei die untere Schicht im wesentlichen durch die obere Schicht und das Substrat eingekapselt wird.

24. Verfahren gemäß Anspruch 22, worin das Substrat ein grundiertes oder nichtgrundiertes Metall ist.

25. Verfahren gemäß Anspruch 22, worin das Substrat ein grundierter oder nichtgrundierter metallischer Teil eines Automobilkörpers ist.

26. Verfahren gemäß Anspruch 22, worin das Substrat ein grundiertes oder nichtgrundiertes, metallisches Verbindungsstück eines Automobilkörpers ist.

27. Verfahren gemäß Anspruch 22, worin das in der Schmelze fließfähige Blattmaterial weiterhin eine polymere Folie zwischen der oberen Schicht und der unteren Schicht umfaßt.

28. Latentes, wärmehärtbares, in der Schmelze fließfähiges Blattmaterial gemäß Anspruch 1, das weiterhin ein Faservlies zwischen der oberen Schicht und der unteren Schicht umfaßt.

## Revendications

1. Matériau en feuille, apte à s'écouler à l'état fondu et thermodurcissable latent, comportant une surface supérieure et une surface inférieure, comportant au moins deux couches comprenant une couche supérieure et une couche inférieure, ladite couche supérieure comprenant une composition apte à s'écouler à l'état fondu et thermodurcissable latente, et ladite couche inférieure comprenant une composition apte à s'écouler à l'état fondu, thermodurcissable et expansible latente, au moment de l'application dudit matériau en feuille sur un substrat en mettant en contact ladite surface inférieure avec celui-ci, et en chauffant à une température élevée, ladite couche inférieure gonflant et ladite couche supérieure s'écoulant.

2. Matériau en feuille, apte à s'écouler à l'état fondu, thermodurcissable latent selon la revendication 1, dans lequel ladite couche supérieure s'écoule latéralement de telle façon que ladite couche inférieure soit largement enrobée par ledit substrat et ladite couche supérieure.

3. Matériau en feuille apte à s'écouler à l'état fondu et thermodurcissable latent selon la revendication 1, comprenant en outre un film de polymère entre ladite couche supérieure et ladite couche inférieure.

4. Matériau en feuille apte à s'écouler à l'état fondu et thermodurcissable latent selon la revendication 1, dans lequel ladite composition apte à s'écouler à l'état fondu de ladite couche supérieure, et ladite composition apte à s'écouler à l'état fondu de ladite couche inférieure, comprennent chacune un système de réticulation ou de thermodurcissement activable à chaud qui s'active pour durcir ladite couche supérieure et ladite couche inférieure.

5. Matériau en feuille apte à s'écouler à l'état fondu et thermodurcissable latent selon la revendication 4, dans lequel ladite composition apte à s'écouler à l'état fondu de ladite couche supérieure et ladite composition apte à s'écouler à l'état fondu de ladite couche inférieure, comprennent chacune le produit de réaction photochimique de produits de départ comprenant (i) un sirop de prépolymère ou de monomère comprenant un ester d'acide acrylique ou méthacrylique ; (ii) une résine époxy ; (iii) un photoinitiateur ; et (iv) un durcisseur activable à chaud pour ladite résine époxy.

6. Matériau en feuille apte à s'écouler à l'état fondu et thermodurcissable latent selon la revendication 5, dans lequel lesdits produits de départ dans le cas de ladite composition apte à s'écouler à l'état fondu de ladite couche supérieure, comprennent en outre un copolymère d'acrylate afin d'accroître la dureté du matériau en feuille traité.

7. Matériau en feuille apte à s'écouler à l'état fondu et thermodurcissable latent selon la revendication 5, dans lequel lesdits produits de départ, dans le cas de ladite composition apte à s'écouler à l'état fondu de ladite couche inférieure, comprennent en outre un agent gonflant ou moussant, ou des sphères expansibles, afin de faire gonfler ladite couche inférieure par chauffage.

8. Matériau en feuille apte à s'écouler à l'état fondu et thermodurcissable latent selon la revendication 4, dans lequel ladite composition apte à s'écouler à l'état fondu de ladite couche supérieure, et ladite composition apte à s'écouler à l'état fondu de ladite couche inférieure, comprennent chacune le produit de réaction photochimique de produits de départ comprenant :
(a) 100 parties en poids d'un sirop de prépolymère ou de monomère comprenant un acrylate ou un méthacrylate d'alkyle, ledit groupe alkyle comprenant d'environ 4 à 12 atomes de carbone ;
(b) d'environ 25 à 150 parties en poids d'une résine époxy ;
(c) d'environ 0,01 à 5 parties en poids d'un photoinitiateur ; et
(d) d'environ 0,1 à 20 parties en poids d'un durcisseur activable à chaud pour ladite résine époxy.

9. Matériau en feuille apte à s'écouler à l'état fondu et thermodurcissable latent selon la revendication 8, dans lequel ledit sirop de prépolymère ou de monomère comprend en outre un monomère de renforcement copolymérisable avec ledit acrylate ou méthacrylate d'alkyle.

10. Matériau en feuille apte à s'écouler à l'état fondu et thermodurcissable latent selon la revendication 9, dans lequel ledit monomère de renforcement est choisi parmi l'acrylate d'isobornyle, le N-vinylcaprolactame, la N-vinylpyrrolidone, la N-vinylpipéridine, le N,N-diméthylacrylamide et l'acrylonitrile.

11. Matériau en feuille apte à s'écouler à l'état fondu et thermodurcissable latent selon la revendication 1, comprenant en outre une doublure anti-adhésive collée sur ladite surface inférieure.

12. Matériau en feuille apte à s'écouler à l'état fondu et thermodurcissable latent selon la revendication 1, sous la forme d'un ruban.

13. Matériau en feuille apte à s'écouler à l'état fondu et thermodurcissable latent selon la revendication A, dans lequel au moins l'un des produits de départ de ladite composition apte à s'écouler à l'état fondu de ladite couche supérieure ou de ladite couche inférieure, comprend en outre un polymère de type polyacétal.

14. Matériau en feuille apte à s'écouler à l'état fondu et thermodurcissable latent selon la revendication 13, dans lequel ledit polymère de type polyacétal est le polyvinylpolybutyral.

15. Matériau en feuille apte à s'écouler à l'état fondu et thermodurcissable latent selon la revendication 1, dans lequel au moins l'un desdits produits de départ de ladite composition apte à s'écouler à l'état fondu de ladite couche supérieure ou de ladite couche inférieure, comprend en outre du méthacrylate de glycidyle, de l'acrylate de glycidyle, ou un autre monomère à fonction époxy.

16. Matériau en feuille apte à s'écouler à l'état fondu et thermodurcissable latent selon la revendication 15, dans lequel au moins l'un desdits produits de départ de ladite composition apte à s'écouler à l'état fondu de ladite couche supérieure ou de ladite couche inférieure, comprend du méthacrylate de glycidyle ou de l'acrylate de glycidyle.

17. Matériau en feuille apte à s'écouler à l'état fondu et thermodurcissable latent selon la revendication 1, comprenant en outre un tissu non tissé stratifié sur la surface inférieure.

18. Matériau en feuille apte à s'écouler à l'état fondu et thermodurcissable latent selon la revendication 1, comprenant en outre une couche d'adhésif sensible à la pression sur la surface inférieure.

19. Matériau en feuille apte à s'écouler à l'état fondu et thermodurcissable latent selon la revendication 3, dans lequel ledit film de polymère est choisi parmi un film de polyester, un polyester non tissé, une feuille d'aluminium, un film de polyimide, un film d'acrylate, un film de nylon et un film de polypropylène.

20. Matériau en feuille apte à s'écouler à l'état fondu et thermodurcissable latent selon la revendication 19, dans lequel ledit film de polymère est un film d'acrylate.

21. Matériau en feuille apte à s'écouler à l'état fondu et thermodurcissable latent selon la revendication 1, dans lequel ladite couche supérieure a une température d'initiation plus élevée que la couche inférieure.

22. Procédé pour conférer des caractéristiques géométriques ou protectrices à un substrat, comprenant les étapes consistant :
(a) à préparer un matériau en feuille selon la revendication 1, selon une configuration prédéterminée ;
(b) à mettre en contact et à coller la surface inférieure sur ledit substrat en laissant la surface supérieure exposée ;
(c) à chauffer ledit matériau en feuille pour effectuer le gonflement de ladite couche inférieure, et pour nettement thermodurcir et durcir ladite couche inférieure et ladite couche supérieure, de façon à permettre à ladite couche supérieure de s'écouler.

23. Procédé pour conférer des caractéristiques géométriques ou protectrices à un substrat, comprenant les étapes consistant :
(a) à préparer un matériau en feuille selon la revendication 2, selon une configuration prédéterminée ;
(b) à mettre en contact et à coller la surface inférieure sur ledit substrat en laissant la surface supérieure exposée ;
(c) à chauffer ledit matériau en feuille pour effectuer le gonflement de ladite couche inférieure, et pour nettement thermodurcir et durcir ladite couche inférieure et ladite couche supérieure, de façon à permettre à ladite couche supérieure de s'écouler latéralement en enrobant largement ladite couche inférieure par ladite couche supérieure et ledit substrat.

24. Procédé selon la revendication 22, dans lequel ledit substrat est un métal apprêté ou non apprêté.

25. Procédé selon la revendication 22, dans lequel ledit substrat est une partie métallique apprêtée ou non apprêtée d'une carrosserie d'automobile.

26. Procédé selon la revendication 22, dans lequel ledit substrat est un joint de métaux apprêtés ou non apprêté d'une carrosserie d'automobile.

27. Procédé selon la revendication 22, dans lequel ledit matériau en feuille apte à s'écouler à l'état fondu, comprend en outre un film de polymère inséré entre ladite couche supérieure et ladite couche inférieure.

28. Matériau en feuille apte à s'écouler à l'état fondu et thermodurcissable latent selon la revendication 1, comprenant en outre un tissu non tissé entre ladite couche supérieure et ladite couche inférieure.
